# EUROPEAN PATENT APPLICATION

(11) **EP 1 176 593 A2**
(43) Date of publication of application: **30.01.2002**
(21) Application number: 01305543.9
(22) Date of filing: 26.06.2001
(51) Int. Cl.: G11B 27/034, G11B 27/32, G11B 20/12, G11B 20/10, G11B 27/34

(54) **Information recording apparatus and information recording method, and information recording medium**

(30) Priority: 27.06.2000 JP 2000193401
(71) Applicant: Pioneer Corporation, Meguro-ku, Tokyo (JP)
(72) Inventor: Nakahara, Masanori, c/o Pioneer Corporation, Tokorozawa-shi, Saitama-ken (JP); Sawabe, Takao, c/o Pioneer Corporation, Tokorozawa-shi, Saitama-ken (JP)
(74) Representative: Haley, Stephen

(57) **Abstract**

An information recording apparatus (S) for dividing continuous record information and recording it in a DVD (1) in which target record information is recorded is provided. The apparatus includes: an operating portion (15) for specifying a division timing in the record information; a pickup (2) for recording in the recording medium front part record information that is record information before the specified division timing, and rear part record information that is record information after the specified division timing; a system controller (7) for generating permission information indicating whether or not it is enabled that at least one of the front part record information and the rear part record information is further divided. The pickup (2) further records the generated permission information in the DVD 1.

## Description

The present invention relates to a technical field of an information recording apparatus and an information recording method, and an information recording medium. More particularly, the present invention relates to: a technical field of an information recording apparatus and an information recording method for performing edit processing for target record information, and then, recording the information in a recording medium; an information recording medium having record information after the edit processing recorded therein; and an information recording medium having a recording control program for the information recording recorded therein.

### 2. Description of the Related Art

In recent years, there has been actively made research and development concerning a DVD that is an optical disc having its recording capacity several times as high as a conventional CD (Compact Disc).

Currently, a reproduction-only DVD having cinemas or the like recorded therein is becoming popular. Otherwise, as specifications of DVD capable of recording, there are established specifications of a DVD capable of recording video information such as dynamic image information and voice information (hereinafter, referred to a video DVD); and specifications of a DVD capable of audio information containing music information and voice information (hereinafter, referred to as an audio DVD).

At this time, in the specifications of video DVD that are currently almost established, reproduction control information for controlling a reproduction mode (reproduction sequence or reproduction time or the like) of vide information is specified to be recorded together with the video information. The reproduction control information is referred to as navigation information in the video DVD specifications. As one of these items of reproduction control information, there has been specified erasure permission information indicating whether or not to permit erasing of the recorded video information from a recording medium. Reference is made to Japanese Patent Application Laid-open No. 2000-82276 for details on the erasure permission information.

On one hand, with respect to an audio DVD recorder that employs audio DVD specifications that is currently under specification as well, its sales is expected. However, in this audio DVD recorder, there may occur necessity of dividing a set of recorded audio information (hereinafter, referred to as original audio information) after recorded, by partially erasing the information.

More specifically, for example, in the case where original audio information is obtained by copying a plurality of music tunes recorded in one CD as is, the plurality of music tunes are recorded in set as the original audio information. Further, the corresponding original audio reproduction control information, i.e., reproduction control information for controlling a reproduction mode of original audio information is recorded so that the plurality of music tunes are reproduced and controlled all together.

At this time, there is a case in which some of the plurality of music tunes are sampled and reproduced. In such a case, it is convenient that original audio information is substantially divided by editing the original audio reproduction control information so that the information can be reproduced by the music tune.

On the other hand, it may be preferable to prohibit the substantial division of the recorded original audio information.

More specifically, in the case where the original audio information is obtained by copying a plurality of music tunes recorded in one CD, as described above, it is not preferable that the music tunes themselves are divided after substantially divided by one music tune.

Therefore, in the above described case, it is required to provide permission information indicating whether or not to permit division of each item of audio information.

However, in the current video DVD specifications and audio DVD specifications, only the above described erasure permission information is specified as information analogous to the above permission information.

The present invention has been made in order to solve the foregoing problem. It is an object of the present invention to provide: an information recording apparatus and an information recording method capable of recording original audio information while setting whether to permit or prohibit execution of edit processing together with division of original audio information that is to be recorded or that has been recorded at an editor's discretion; an information recording medium having record information after the edit processing recorded therein; and an information recording medium having a recording control program for the information recording recorded therein.

The above object of the present invention can be achieved by an information recording apparatus of the present invention for recording information in a recording medium. The apparatus includes: a specification device for specifying a division timing in the recording information; a recording device for recording in said recording medium front part record information that is the record information before said specified division timing and rear part record information that is the record information after said specified division timing; a generation device for generating permission information indicating whether or not to permit at least one of said front part record information and said rear part record information to be further divided; and an permission information recording device for recording said generated permission information in said recording medium.

According to the present invention, there is recorded the permission information indicating whether or not to permit both or at least either of the front part record information and the rear part record information to be further divided. Thus, it is possible to permit or prohibit the front part record information and the rear part record information to be further divided. Accordingly, it possible to freely set whether or not to further divide the front part record information and the rear part record information by user's arbitrary selection.

In one aspect of the present invention, said permission information takes any one of: a first state in which it is enabled that at least either one of said front part record information and said rear part record information is erased from said recording medium after recorded, and that said at least one is further divided; a second state in which it is disabled that said at least one is erased from said recording medium after recorded, but it is enabled that said at least one is further divided; and a third state in which it is disabled that said at least one is erased from said recording medium after recorded, and that said at least one is further divided.

According to this aspect of the present invention, it is possible to control whether or not to permit further division of each partial record information and whether or not to permit the partial record information to be erased from a recording medium.

In another aspect of the present invention, the apparatus further includes a detection device for detecting from the recording medium said permission information recorded in said recording medium; a change device for changing the content of said detected permission information; and an overwrite device for overwriting said changed permission information on said recording medium.

According to this aspect of the present invention, the change permission information having the permission information changed can be recorded, thus making it possible to freely set whether or not the front part record information and the rear part record information are further divided, respectively.

The above object of the present invention can be achieved by an information recording apparatus of the present invention. The information recording apparatus includes an permission information detection device for detecting the permission information from a recording medium having record information and permission information indicating whether or not to permit execution of edit processing for dividing the record information into two or more items of partial record information recorded therein; a judgment device for judging the content of the detected permission information; and an execution device for, only when said judged content corresponds to the content in which said division processing is enabled, executing said edit processing.

According to the present invention, only when the content of the permission information is directed to the content of enabling division processing, edit processing is executed, thus making it possible to prevent division of undesired record information from being executed.

In one aspect of the present invention, said permission information takes any one of: a first state in which it is enabled said partial record information after divided is erased from said recording medium, and that the partial record information is further divided; a second state in which it is disabled that said partial record information after divided is erased from said recording medium, but it is enabled that the partial record information is further divided; and a third state in which it is disabled that said partial record information after divided is erased from said recording medium, and that the partial record information is further divided.

According to this aspect of the present invention, it is possible to control whether or not to the permit further division of each partial record information and whether or not to permit the partial record information to be erased from a recording medium.

In another aspect of the present invention, said execution device includes: a specification device for specifying a division timing to divide the record information; a division device for dividing said record information into front part record information that is said record information before said specified division timing and rear part record information that is said record information after said specified division timing; and an permission information recording device for generating permission information having the same content as said permission information recorded in said recording medium before divided, relevant to each of said front part record information and said rear part record information, and then, recording the information in said recording medium.

According to the sixth aspect of the present invention, when divisional edit processing is enabled, the record information can be divided at an arbitrary division timing.

In another aspect of the present invention, said record information comprises audio information that contains at least music information and voice information.

According to this aspect of the present invention, one music number in the audio information, for example, is recorded as partial record information, and can be further reproduced.

In another aspect of the present invention, said recording medium comprises a DVD capable of information recording.

According to this aspect of the present invention, a large amount of the record information can be recorded while controlling whether or not to permit division.

The above object of the present invention can be achieved by an information recording method of the present invention for recording information in a recording medium, said method includes: a specification process of specifying a division timing in the recording information; a recording process of recording in said recording medium front part record information that is the record information before said specified division timing and rear part record information that is the record information after said specified division timing; a generation process of generating permission information indicating whether or not to permit at least one of said front part record information and said rear part record information to be further divided; and a permission information recording process of recording said generated permission information in said recording medium.

According to the present invention, there is recorded the permission information indicating whether or not to permit both or at least either of the front part record information and the rear part record information to be further divided. Thus, it is possible to permit or prohibit the front part record information and the rear part record information to be further divided. Accordingly, it possible to freely set whether or not to further divide the front part record information and the rear part record information by user's arbitrary selection.

In one aspect of the present invention, said permission information takes any one of: a first state in which it is enabled that at least either one of said front part record information and said rear part record information is erased from said recording medium after recorded, and that said at least one is further divided; a second state in which it is disabled that said at least one is erased from said recording medium after recorded, but it is enabled that said at least one is further divided; and a third state in which it is disabled that said at least one is erased from said recording medium after recorded, and that said at least one is further divided.

According to this aspect of the present invention, it is possible to control whether or not to permit further division of each partial record information and whether or not to permit the partial record information to be erased from a recording medium.

In another aspect of the present invention, the method includes a detection process of detecting from the recording medium said permission information recorded in said recording medium; a change process of changing the content of said detected permission information; and an overwrite process of overwriting said changed permission information recording medium.

According to this aspect of the present invention, the change permission information having the permission information changed can be recorded, thus making it possible to freely set whether or not to further divide the front part record information and the rear part record information, respectively.

The above object of the present invention can be achieved by an information recording method of the present invention. The method includes: an permission information detection process of detecting the permission information from a recording medium having record information and permission information indicating whether or not to permit execution of edit processing for dividing the record information into two or more items of partial record information recorded therein; a judgment process of judging the content of the detected permission information; and an execution process of, only when said judged content corresponds to the content in which said division processing is enabled, executing said edit processing.

According to the present invention, only when the content of the permission information is directed to the content of enabling division processing, edit processing is executed, thus making it possible to prevent division of undesired record information from being executed.

In one aspect of the present invention, said permission information takes any one of: a first state in which it is enabled said partial record information after divided is erased from said recording medium, and that the partial record information is further divided; a second state in which it is disabled that said partial record information after divided is erased from said recording medium, but it is enabled that the partial record information is further divided; and a third state in which it is disabled that said partial record information after divided is erased from said recording medium, and that the partial record information is further divided.

According to this aspect of the present invention, it is possible to control whether or not to permit further division of each partial record information and whether or not to permit the partial record information to be erased from a recording medium.

In another aspect of the present invention, said execution process includes: a specification process of specifying a division timing to divide the record information; a division process of dividing said record information into front part record information that is said record information before said specified division timing and rear part record information that is said record information after said specified division timing; and an permission information recording process of generating permission information having the same content as said permission information recorded in said recording medium before divided, relevant to each of said front part record information and said rear part record information, and then, recording the information in said recording medium.

According to this aspect of the present invention, when divisional edit processing is enabled, the record information can be divided at an arbitrary division timing.

The above object of the present invention can be achieved by an information recording medium of the present invention. The medium includes: a record information area having one or plural items of recording information recorded therein; and an permission information recording region having permission information indicating whether or not to permit execution of edit processing for dividing said each item of recording information into one or more items of partial record information.

According to this aspect of the present invention, there is provided the permission information recording region having recorded therein the permission information indicating whether or not to permit execution of edit processing for dividing the record information into partial record information. Thus, it is possible to permit or prohibit the partial record information to be further divided. Accordingly, it possible to freely set whether or not to further divide the front part record information and the rear part record information by user's arbitrary selection.

In one aspect of the present invention, said permission information takes any one of: a first state in which it is enabled said partial record information after divided is erased from said recording medium, and that the partial record information is further divided; a second state in which it is disabled that said partial record information after divided is erased from said recording medium, but it is enabled that the partial record information is further divided; and a third state in which it is disabled that said partial record information after divided is erased from said recording medium, and that the partial record information is further divided.

According to this aspect of the present invention, it is possible to control whether or not to permit further division of each partial record information and whether or not to permit the partial record information to be erased from a recording medium.

The above object of the present invention can be achieved by an information recording medium of the present invention. The information recording medium has a recording control program for functioning a recording computer contained in an information recording apparatus for recording target record information in a recording medium. The recording control program causes said recording computer to function as: a specification device for specifying a division timing in the recording information; a recording device for recording in said recording medium front part record information that is the record information before said specified division timing and rear part record information that is the record information after said specified division timing; a generation device for generating permission information indicating whether or not to permit at least one of said front part record information and said rear part record information to be further divided; and an permission information recording device for recording said generated permission information in said recording medium.

According to the present invention, the recording computer functions to record the permission information indicating whether or not both or at least either of the front part record information and the rear part record information is further divided. Thus, it is possible to permit or prohibit the front part record information and the rear part record information to be further divided. Accordingly, it possible to freely set whether or not to further divide the front part record information and the rear part record information by user's arbitrary selection.

In one aspect of the present invention, said permission information takes any one of: a first state in which it is enabled that at least either one of said front part record information and said rear part record information is erased from said recording medium after recorded, and that said at least one is further divided; a second state in which it is disabled that said at least one is erased from said recording medium after recorded, but it is enabled that said at least one is further divided; and a third state in which it is disabled that said at least one is erased from said recording medium after recorded, and that said at least one is further divided.

According to this aspect of the present invention, it is possible to control whether or not to permit further division of each partial record information and whether or not to permit the partial record information to be erased from a recording medium.

In another aspect of the present invention, said recording control program causing said recording computer to further function as: a detection device for detecting from the recording medium said permission information recorded in said recording medium; a change device for changing the content of said detected permission information; and an overwrite device for overwriting said changed permission information on said recording medium.

According to this aspect of the present invention, the recording computer is further functioned so as to record the change permission information having permission information changed, thus making it possible to freely set whether or not to further divide the front part record information and the rear part record information, respectively.

The above object of the present invention can be achieved by an information recording medium of the present invention having a recording control program recorded therein. The recording control program causes a recording computer contained in an information recording apparatus to function as: an permission information detection device for detecting the permission information from a recording medium having record information and permission information indicating whether or not to permit execution of edit processing for dividing the record information into two or more items of partial record information recorded therein; a judgment device for judging the content of the detected permission information; and an execution device for, only when said judged content corresponds to the content in which said division processing is enabled, executing said edit processing.

According to the present invention, a recording computer is functioned so as to execute edit processing only when the content of permission information is directed to the content of enabling division processing. Thus, division of undesired record information can be prevented from being executed.

In one aspect of the present invention, said permission information takes any one of: a first state in which it is enabled said partial record information after divided is erased from said recording medium, and that the partial record information is further divided; a second state in which it is disabled that said partial record information after divided is erased from said recording medium, but it is enabled that the partial record information is further divided; and a third state in which it is disabled that said partial record information after divided is erased from said recording medium, and that the partial record information is further divided.

According to this aspect of the present invention, it is possible to control whether or not to permit further division of each partial record information and whether or not to permit the partial record information to be erased from a recording medium.

In another aspect of the present invention, said recording control program causes said recording computer that functions as said execution device to further function as: a specification device for specifying a division timing to divide the record information; a division device for dividing said record information into front part record information that is said record information before said specified division timing and rear part record information that is said record information after said specified division timing; and an permission information recording device for generating permission information having the same content as said permission information recorded in said recording medium before divided, relevant to each of said front part record information and said rear part record information, and then, recording the information in said recording medium.

According to this aspect of the present invention, when divisional edit processing is enabled, the record information can be divided at an arbitrary division timing.

The above object of the present invention can be achieved by a computer data signal of the present invention embodied in a carrier wave and representing a series of instructions which cause a computer to perform steps to execute a recording control process in an information recording apparatus. The steps is provided with: a specification step for specifying a division timing in the recording information; a recording step for recording in said recording medium front part record information that is the record information before said specified division timing and rear part record information that is the record information after said specified division timing; a generation step for generating permission information indicating whether or not to permit at least one of said front part record information and said rear part record information to be further divided; and an permission information recording step for recording said generated permission information in said recording medium.

According to the present invention, the recording computer functions to record the permission information indicating whether or not both or at least either of the front part record information and the rear part record information is further divided. Thus, it is possible to permit or prohibit the front part record information and the rear part record information to be further divided. Accordingly, it possible to freely set whether or not to further divide the front part record information and the rear part record information by user's arbitrary selection.

The above object of the present invention can be achieved by a computer data signal of the present invention embodied in a carrier wave and representing a series of instructions which cause a computer to perform steps to execute a recording control process in an information recording apparatus. The steps is provided with: an permission information detection step for detecting the permission information from a recording medium having record information and permission information indicating whether or not to permit execution of edit processing for dividing the record information into two or more items of partial record information recorded therein; a judgment step for judging the content of the detected permission information; and an execution step for, only when said judged content corresponds to the content in which said division processing is enabled, executing said edit processing.

According to the present invention, a recording computer is functioned so as to execute edit processing only when the content of permission information is directed to the content of enabling division processing. Thus, division of undesired record information can be prevented from being executed.

### In the Drawings;

FIG. 1 is a diagram of a physical format in audio DVD specifications;
FIG. 2 is a diagram showing a logical format in audio DVD specifications;
FIG. 3A is a diagram showing a specific example of the logical format;
FIG. 3B is a diagram showing a specific example of object record sequence;
FIG. 4 is a block diagram depicting a general configuration of an information recording and reproducing apparatus according to one embodiment of the present invention;
FIG. 5 is a flow chart showing divisional edit processing according to one embodiment of the present invention;
FIG. 6 is a diagram illustrating track division processing according to one embodiment of the present invention;
FIG. 7A is a diagram exemplifying object record sequence information before divided in track division processing according to one embodiment of the present invention;
FIG. 7B is a diagram exemplifying object record sequence information after divided in track division processing according to one embodiment of the present invention;
FIG. 8 is a diagram illustrating track division processing according to one embodiment of the present invention;
FIG. 9 is a flow chart showing reproduction processing according to one embodiment of the present invention;
FIG. 10 is a flow chart showing divisional record processing according to one embodiment of the present invention;
FIG. 11 is a flow chart showing permission information change processing according to one embodiment of the present invention;
FIG. 12A is a view exemplifying an edit selection screen in a setting screen example in permission information change processing;
FIG. 12 B is a view exemplifying an edit selection screen in a setting screen example in permission information change processing;
FIG. 13A is a view exemplifying a track selection screen in a setting screen example in permission information change processing;
FIG. 13B is a view exemplifying a track selection screen in a setting screen example in permission information change processing;
FIG. 14A is a view exemplifying a protection check screen in a setting screen example in permission information change processing;
FIG. 14B is a view exemplifying a protection content selection screen in a setting screen example in permission information change processing;
FIG. 15A is a view exemplifying a protection content selection screen in a setting screen example in permission information change processing;
FIG. 15B is a view exemplifying a check screen in a setting screen example in permission information change processing, where, and FIG. 15B is a view exemplifying a check screen.

Next, preferred embodiments of the present invention will be explained below with reference to the drawings.

Additionally, the embodiments to be explained below is based upon the above audio DVD standard for recording audio information in a DVD, simultaneously, in the present embodiment, the present invention is employed for editing or generating reproduction controlling information (specifically, object recording sequence OSI to be described later and permission information contained therein) in the standard.

### (I) Audio DVD standard

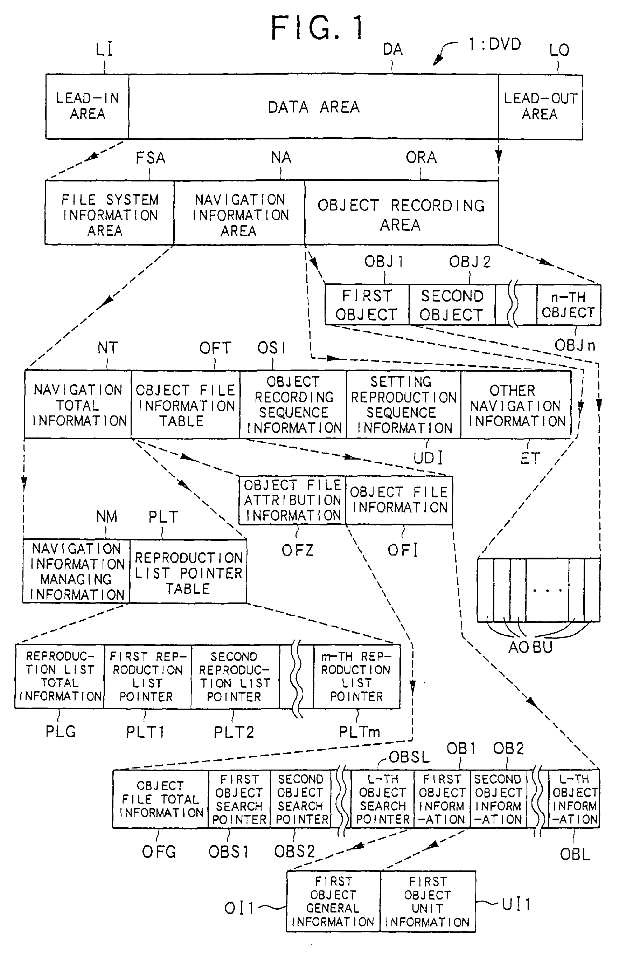

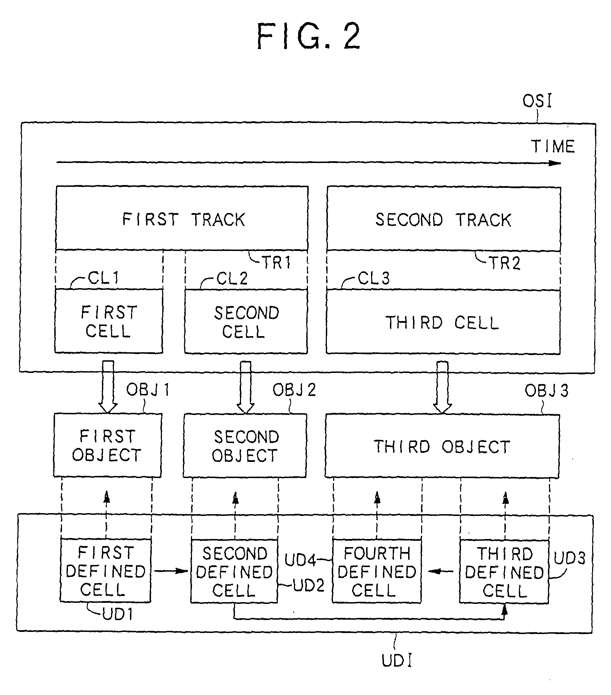

Before explaining embodiments according to the present invention, at first, the standard of the audio DVD to which the present embodiment is employed will be described with reference to FIG. 1 and FIG. 2.

FIG. 1 is a diagram for showing a physical format in a DVD after the audio information is recorded on the basis of the standard of the audio DVD (i.e., specifically, a physical format for showing a recording positions or the like in the DVD of the respective information). FIG. 2 is a diagram for showing a logical recording format generated so as to control the reproduction manner of the audio information recorded in the DVD (i.e., specifically, connection of the respective information upon reproduction and the recording positions on the DVD of respective information to be connected).

At first, the physical format in the audio DVD standard will be described with reference to FIG. 1. In FIG. 1, DVD 1 is a DVD capable of recording such as a DVD-R (DVD- Recordable) which can be rewritten only once or a DVD-RW (DVD-Recordable) which can be rewritten in plural times.

As shown in FIG. 1, according to the standard of the audio DVD, a lead-in area LI, a data area DA and a lead-out area LO are formed from its inner radius in the DVD 1. In the lead-in-area LI, starting information or the like, which is controlling information to start reproduction of the information in the DVD is recorded. In the data area DA, reproduction controlling information to control the audio information to be reproduced in practice and the reproduction manner of the audio information is recorded. The reproduction controlling information is specifically reproduction controlling information showing reproduction order of respective information constructing the audio information and reproduction time or recording positions on the DVD or the like. In the lead-out-area LO, termination information or the like, which is controlling information to terminate reproduction of the audio information is recorded.

Next, a file system information area FSA, a navigation information area NA and an object recording area ORA are formed in the above data area DA.

Among the above areas, in the object recording area ORA a plurality of audio objects (AOB) which are the audio information itself to be recorded are recorded. In this case, a series of audio information, which is recorded during a period from recording is commenced once until it is terminated, corresponds to an audio object just after the recording is terminated. In other words, audio objects are formed in the object recording area ORA one by one every time a series of the audio information is completely recorded.

Alternatively, FIG. 1 shows a state that n pieces of audio objects are recorded as a first object OBJ1 to n-th OBJn with being numbered, respectively.

Additionally, in a logical format to be described later, a series of audio objects which are recorded in the DVD 1 during a period from recording is commenced once until it is terminated, is referred to as a track.

Next, one audio object is comprised of a plurality of audio object units AOBU. In this case, the audio object unit AOBU is recorded by segmenting the audio object for every period of time (for example, for every second) upon recording.

Alternatively, upon recording of the audio information, this audio object unit AOBU becomes the minimum unit for edition or deletion of the audio object.

On the other hand, in the navigation information area NA in the data area DA, the reproduction controlling information is recorded as the navigation information to control the reproduction manner of the audio information recorded in the object recording area ORA to be described later.

Further, in the file system information area FSA, system information is recorded to store the above navigation information by hierarchical structure in filling format in the navigation information area NA.

Next, as the navigation information in the navigation information area NA, navigation total information NT, an object file information table OFT, object recording sequence information OSI, setting reproduction sequence information UDI and other navigation information ET are recorded.

Among the above information, the navigation total information NT is comprised of navigation information managing information NM, which is also called General Information (GI), and a reproduction list pointer table PLT. The navigation information managing information NM is total information of the DVD 1 for managing a storing position (recording position) in respective sequences in the navigation information area NA or in the navigation information area NA of the information table, and a recording starting position of the object recording area ORA or the like. The reproduction list pointer table PLT indicates a corresponding relation between the navigation information stored in the setting reproduction sequence information UDI and a reproduction list (referred to as play list (PL) in the audio DVD standard) to be described later.

Next, the object file information table OFT is comprised of object file attribution information OFZ and object file information OFI. The object file attribution information OFZ comprises variety of objects to be recorded in the object recording area ORA and the attribution information related to this variety or the like. The variety of objects indicates that objects to be recorded in the object recording area ORA is an audio object in the case of the present embodiment. The object file information OFI comprises a reproduction start time and a reproduction termination time of respective objects (audio object), which are the ones in which a head of the first object OBJ1 is defined as a start point, and the information related to them, or the like.

Further, in the object file information OFI, various information related to one or a plurality of the above audio objects recorded on the DVD 1 is recorded. Specifically, the various information is comprised of object file total information OFG, L pieces of object search pointers OBS (L is the number of the audio objects, which are recorded in the DVD 1) and L pieces of object information OBS (namely, as many as the object search pointer OBS). The object file total information OFG includes total number or the like on the DVD 1 of the audio object at the moment. The address information of heads of respective audio objects to be searched (reproduced) in the reproduction processing or the like to be described later, are described in the object search pointers OBS. The address information or the like indicating a recording position on the DVD 1 of heads of respective audio objects are described in the reproduction processing or the like in the object information OBS.

Furthermore, respective object information OBS are comprised of object general information OI and object unit information UI. The object general information OI comprises a reproduction start time and a reproduction termination time of respective objects and the information related to them. The object unit information UI comprises information such as a reproduction time of the audio object unit AOBU constructing respective audio objects, a recording start address or a size thereof or the like.

Next, the object recording sequence OSI is referred to as an original program chain (ORG-PGC) in the audio DVD standard. The object recording sequence OSI is information indicating a recording sequence of respective audio objects. Namely, it indicates in what order, what audio information is recorded in the DVD 1 as the audio object in the beginning of recording.

Additionally, the above described object file information table OFT and the object recording sequence OSI are newly generated, updated and recorded every time a new audio object is recorded in the DVD 1. Due to these information, a user is capable of reproducing them by the order and the reproduction time as same as those in the case that respective audio objects are recorded.

On the other hand, the setting reproduction sequence information UDI is referred to as a user defined program chain (UD-PGC) in the audio DVD standard. The user generates one or plural setting reproduction sequence information UDI in order to reproduce logically all or a part of the recorded audio objects in a mutual, free and original combination. The setting reproduction sequence information UDI are recorded with being numbered every time the user newly sets them. In this case, the user defined program chain is associated with the reproduction list described above.

Further, other navigation information ET is comprised of the information necessary for controlling reproduction in addition to the above described respective navigation information.

Next, pointer information is recorded as a reproduction list pointer table PLT. The pointer information shows a corresponding relation between the number of one or a plurality of the above setting reproduction sequence information UDI, which are recorded on the DVD 1 at the moment, and the number of the reproduction list set by the user. Specifically, the reproduction list pointer table PLT is comprised of play list total information PLG and a first to m-th reproduction list pointers PLT 1 to PLT m. The play list total information PLG includes a final address or the like in a region on the DVD 1 where the total number at the moment of the pointer information and the reproduction list pointer table PLT are recorded. The reproduction list pointers PLT 1 to PLT m indicate the numbers of the setting reproduction sequence information UDI, which are associated with the first to the m-th reproduction lists set by the user in the above setting reproduction sequence information UDI, respectively.

Next, a logical format for logically controlling a reproduction manner upon reproducing the audio information, which is recorded in the DVD 1 in accordance with the above described physical format, will be described with reference to FIG. 2. The reproduction manner includes the reproduction order or a range of the audio information to be reproduced in the audio information.

FIG. 2 is a diagram for showing the logical format in a hierarchical structure. However, the audio information on the DVD 1 is recorded in a manner as shown in FIG. 1 and the logical format is obtained as a result that a range and a reproduction order of the audio information to be reproduced are described by using the above respective navigation information in a hierarchical structure, as described above.

At first, a logical format of the above object recording sequence information OSI will be described.

As described above, the object recording sequence information OSI is information indicating a recording sequence (recording procedures such as recording sequence) of respective audio objects. However, in the case of reproducing the audio objects on the basis of the object recording sequence information OSI, the user may be allowed only to reproduce the audio objects in an order of a first recording, so that there is only one reproduction manner

In other words, a first track TR1 is recorded prior to a second track TR2 in FIG. 2. However, in this case, a reproduction order capable of being set as the object recording sequence information OSI has only an order from the first track TR1 to the second track TR2. The first track TR1 is a track corresponds to a series of the audio objects to be recorded in the DVD 1 during a period from recording is commenced once until it is terminated as described above.

Further, one track TR is logically comprised of one or a plurality of cells CL. The cells CL are all or a part of one track TR. In one cell CL, the audio information is standardized such that they should be successive. In other words, one track TR is comprised of one cell CL or more.

Assuming that, for example, a broadcast program for an hour is recorded in the DVD 1 as the audio object, one track TR is comprised of only one cell CL as shown in the second track TR2 and the third cell CL3 of FIG. 2 in this state.

On the other hand, in the case that the object recording sequence OSI is set in such a manner that the track TR is divided before and after a part of the formed one track TR so that a part of the formed one track TR is not capable of being reproduced after the recording, it is only standardized that the cell CL is divided before and after a part, which is not capable of being reproduced in the audio DVD standard (refer to the first track TR1, the first cell CL1 and the second cell CL2 in FIG. 2). For example, the case corresponds to a case that the audio object corresponding to a period of a commercial message during the broadcast program has been on air is deleted so that it cannot be reproduced, or one track TR is divided for each song after this one track TR is formed by plurality of songs or the like.

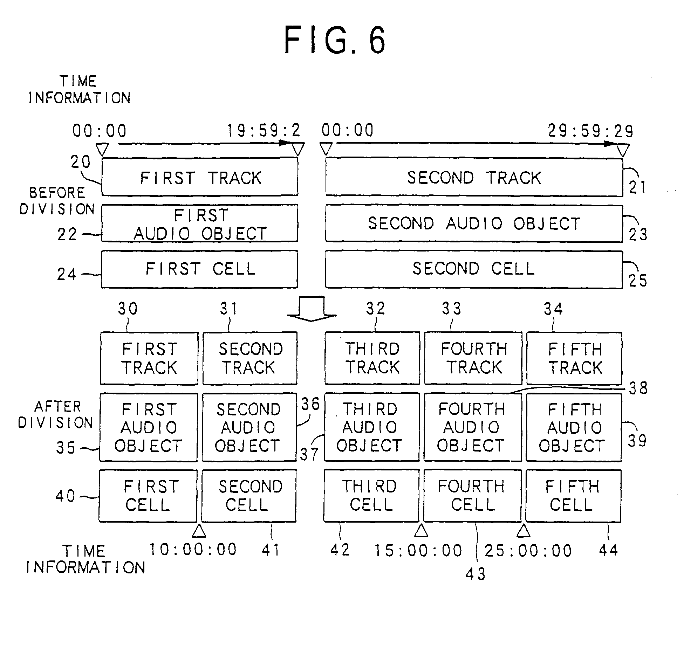

In the above case, as described later, according to the present embodiment, the object recording sequence information OSI is edited so that the track TR itself is divided in accordance to division of the cell CL (refer to FIG. 6 to be described later).

Next, in a relation between respective cells CL physically configured, and respective audio objects logically formed, one cell CL is ordinary associated with one audio object as shown in FIG. 2. Therefore, for example, if one cell CL is deleted on the object recording sequence information OSI, a corresponding audio object also becomes unnecessary to be reproduced.

Further, a logical format of the above setting reproduction sequence information UDI will be described.

As described above, the setting reproduction sequence information UDI (user defined program chain) is also referred to as a reproduction list in the audio DVD standard. The user sets and records the setting reproduction sequence information UDI so that the user can arbitrarily reproduce a part or all of a plurality of audio objects in an arbitrary order.

In the above case, the above described track TR does not exist in the setting reproduction sequence information UDI. Further, it is possible to set a plurality of setting reproduction sequence information UDI.

Next, one setting reproduction sequence information UDI is logically comprised of one or a plurality of defined cells UD as shown in FIG. 2. In this case, one defined cell UD comprises information, which logically shows reproduction segments arbitrarily set by the user (reproduction segments as a part of the respective audio objects) and a reproduction order between respective reproduction segments. This defined cell UD is set so as to reproduce respective audio objects with making reference to them. This is an artifice in a standard to realize a plurality of reproduction manners with changing original audio objects as little as possible.

More specifically, as shown in FIG. 2, logically setting a first defined cell UD1, a second defined cell UD2, a third defined cell UD3 and a fourth defined cell UD4, then, one setting reproduction sequence information UDI is comprised of defining these defined cells so that they are reproduced in such an order that the first defined cell UD1, the second defined cell UD2, the third defined cell UD3, and the fourth defined cell UD4. The first defined cell UD1 designates a part of the first object OBJ1 as a reproduction segment. The second defined cell UD2 designates a part of the second object OBJ1 as a reproduction segment. The third defined cell UD3 and the fourth defined cell UD4 designate various parts of the third object OBJ3, respectively, as reproduction segments.

### (II) Embodiments of Divisional Edit Processing

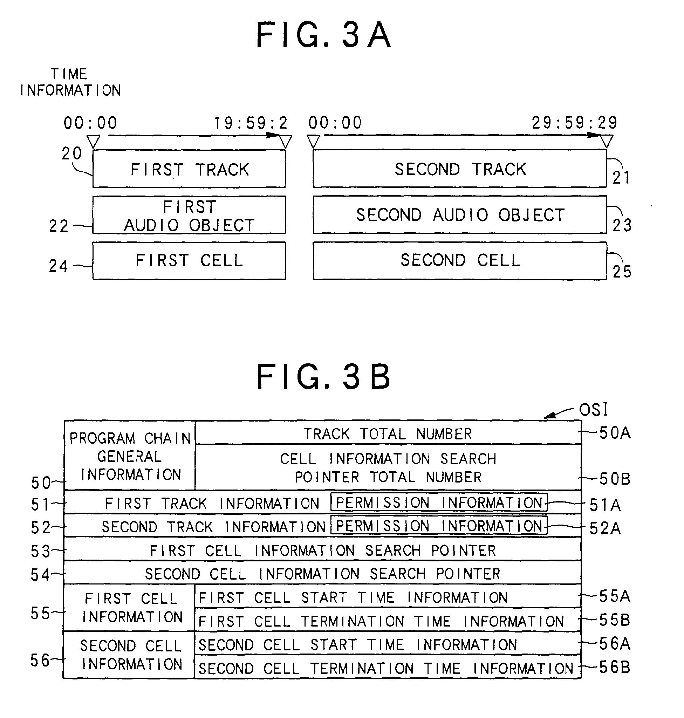

Now, embodiments of divisional edit processing according to the present invention in conformance with the above described audio DVD specifications, will be described with reference to FIG. 3 to FIG. 9.

First, permission information according to the embodiments incorporated an object record sequence information OSI in the above described audio DVD specifications, will be described with reference to FIG. 3 together with the object record sequence information OSI.

Here, the permission information according to the embodiments is directed to information indicating whether or not each track TR shown in FIG. 2 is divided into two or more sections, respectively, by means of edit processing described later.

The permission information will be specifically described with reference to FIG. 3.

The following description exemplifies that, on one DVD 1, there are recorded a first track 20 whose reproduction time is 19 minutes, 59 seconds, and 2 frames (one frame corresponds to 1/30 seconds); and a second track 21 whose reproduction time is 29 minutes, 59 seconds, and 29 frames shown in a logical format of FIG. 3A. The description is given by exemplifying object record sequence information OSI that corresponds to the logical format.

Here, with respect to a logical format exemplified in FIG. 3A, a first audio object 22 and a first cell 24 are associated with the first track 20, and a second audio object 23 and a second cell 25 are associated with the second track 21 (refer to FIG. 2).

At this time, the object record sequence information OSI that corresponds to the logical format shown in FIG. 3A has the content exemplified in FIG. 3B.

As shown in FIG. 3B, the object recording sequence information OSI includes a program chain general information 50, first track information 51 (its value is "1"), second track information 52 (its value is "1"), a first cell information search pointer 53, a second cell information search pointer 54, first cell information 55 and second cell information 56. The program chain general information 50 includes a track total number 50A (its value is "2"), in which the total number of the tracks TR recorded in the DVD 1 is described, and a cell information search pointer total number 50B (its value is "2"), in which the total number of the cell information search pointers to be described later is described. The total number of the cells CL included in the first track 20 before division is described in the first track information 51. The total number of the cells CL included in the second track 21 before division is described in the second track information 52. A recording position (recording address) on the DVD 1, in which the first cell information 55 to be described later is described, is described in the first cell information search pointer 53. A recording position on the DVD 1, in which the second cell information 56 to be described later is described, is described in the second cell information search pointer 54. The first cell information 55 includes first cell start time information 55A (its value is "0 minute, 0 second and 0 frame), in which a reproduction start time of the first cell 24 before division is described, and first cell termination time information 55B (its value is "19 minutes, 59 seconds and 2 frames), in which a reproduction termination time of the first cell 24 is described. The second cell information 56 includes second cell start time information 56A (its value is "0 minute, 0 second and 0 frame), in which a reproduction start time of the second cell 25 before division is described, and second cell termination time information 56B (its value is "29 minutes, 59 seconds and 29 frames), in which a reproduction termination time of the second cell 25 is described.

The permission information according to the present invention is set for each track information as shown in FIG. 3B. Specifically, first track information 51 contains permission information 51A indicating whether or not to permit division of the first track 20 and subsequent. Further, second track information 52 contains permission information 52A indicating whether or not to permit division of the second track 21 and subsequent.

In more detail, each permission information has a length of 2 bites each for the permission information 51A and permission information 52A. The division permission or prohibition information is contained together with information indicating whether or not to permit the corresponding tracks to be erased from DVD 1 and further divided.

That is, in the subsequent divisional edit processing, in the case where it is enabled that the corresponding tracks are erased from DVD 1 and further divided, the permission information 51A and permission information 52A are set to "00b ("b" denotes a binary number)". In the case where it is not enabled that the corresponding tracks are erased from DVD 1, but it is enabled that the tracks are further divided, the permission information 51A and permission information 52A are set to 10b. In the case where it is not enabled that the corresponding tracks are erased from DVD 1 and further divided, the permission information 51A and permission information 52A are set to "11b".

Erasing a track from DVD 1 includes partially erasing a part of each of the tracks; tentatively erasing the entirety of each track; and temporarily erasing a part of each of the tracks.

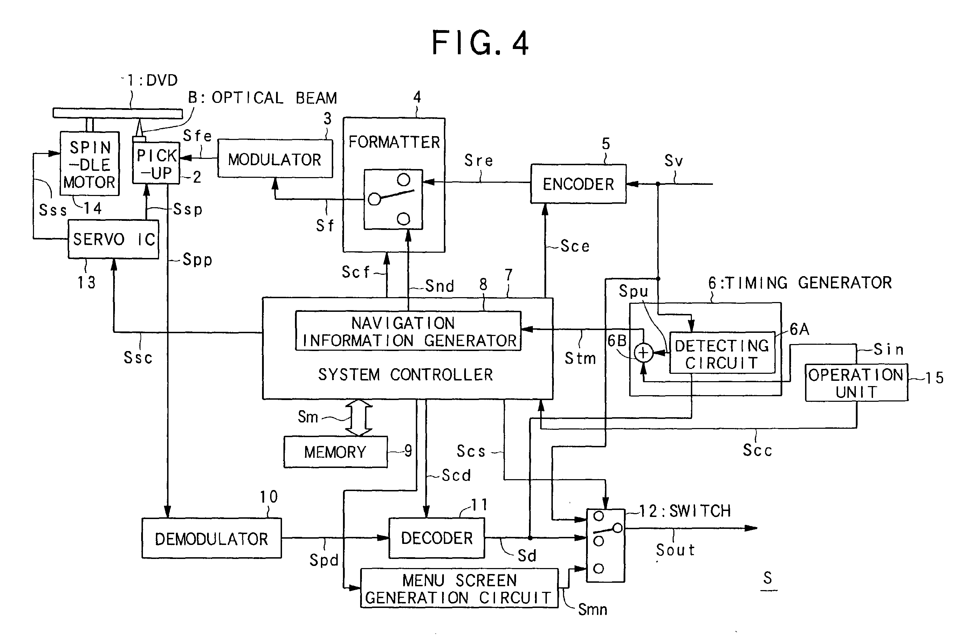

Now, a general configuration of an information recording and reproduction apparatus for performing divisional edit processing according to one embodiment of the present invention, will be described with reference to FIG. 4. FIG. 4 is a block diagram depicting a general configuration of the information recording and reproduction apparatus.

As shown in FIG. 4, an information recording and reproduction apparatus S according to the embodiments is composed of: a pickup 2 serving as a recording device, an permission information recording device, an overwrite device, a detection device, or an permission information detection device; a modulator 3; a formatter 4; an encoder 5; a timing generator 6; a system controller 7 serving as a recording device, generation device, an permission information recording device, a change device, a judgment device, an execution device, a division device, or an overwrite device; a memory 9; a demodulator 10; a decoder 11; a switch 12; a servo IC (Integrated Circuit) 13; a spindle motor 14; an operation unit 15 serving as a specification device; and a menu screen generating circuit 16.

Additionally, the system controller 7 is provided with a navigation information generator 8.

Further, the timing generator 6 is comprised of a detecting circuit 6A and an addition circuit 6B.

Next, schematic operations of respective units will be explained below.

The spindle motor 14 rotates the DVD 1 with predetermined number of revolutions on the basis of a spindle controlling signal Sss from the servo IC13.

On the other hand, recording information Sr including the audio information to be recorded in the DVD 1 is inputted from the outside, then, it is inputted in the encoder 5, one input terminal of the switch 12 and the detecting circuit 6A.

Further, the encoder 5 performs a predetermined encoding processing, which is specifically, for example, compression encoding processing in an MPEG (Moving Picture Experts Group) system, with respect to the recording information Sr on the basis of a controlling signal Sce from the system controller 7 and generates a encoding signal Sre to output it to the formatter 4.

Thus, the formatter 4 superimposes a navigation information signal Snd from the navigation information generator 8 to be described later and the above encoding signal Sre on the basis of a controlling signal Scf from the system controller 7 so that they are formed in a physical format. Then, the formatter 4 generates a superimposed signal Sf to output it to the modulator 3.

After that, the modulator 3 provides the superimposed signal Sf with predetermined modulation processing, which is specifically, for example, 8-16 modulation processing, and generates a modulation signal Sfe to outputted it to the pickup 2.

Thus, the pickup 2 generates an optical beam B, whose strength is modulated by the modulation signal Sfe, and irradiates it to an information track in an information recording surface (not illustrated) of the DVD 1, so that pits in associated with the navigation information, which is included in the modulation signal Sfe, and the audio information are generated on the information track. Thus, the pickup 2 records the navigation information and the audio information on the DVD 1 in a physical format shown in FIG. 1.

In the above case, an objective lens (not illustrated) in the pickup 2 (an objective lens for condensing the optical beam B) is moved in the above vertical and horizontal directions on the basis of a pickup servo signal Ssp to be outputted from the servo IC 13. Namely, focus servo controlling and tracking servo controlling are performed. As a result, the declination between a condensing position of the optical beam B and the above information track in a vertical and horizontal directions with respect to the above information recording surface is dissolved.

Therefore, the servo IC13 generates the above spindle controlling signal Sss and a pickup servo signal Ssp on the basis of a controlling signal Ssc from the system controller 7 to output these signals to the spindle motor 14 and the pickup 2, respectively.

On one hand, in the case of reproducing the audio information or the like, which has been already recorded in the DVD 1, the pickup 2 generates the optical beam B to be reproduced having certain strength and irradiates it to the information track in which the above pits are formed. Then, the pickup 2 generates a detecting signal Spp in associated with the audio information or the like on the basis of its reflection light and outputs it to the demodulator 10.

Thus, the demodulator 10 provides the detecting signal Spp with demodulation processing in associated with the modulation processing in the above modulator 3, and generates a demodulation signal Spd to output it to the decoder 11.

Then, the decoder 11 provides the demodulation signal Spd with decoding processing in associated with the encoding processing in the above encoder 5 on the basis of a controlling signal Scd from the system controller 7, and generates a decoding signal Sd to output it to other input terminal of the switch 12 and the detecting circuit 6A.

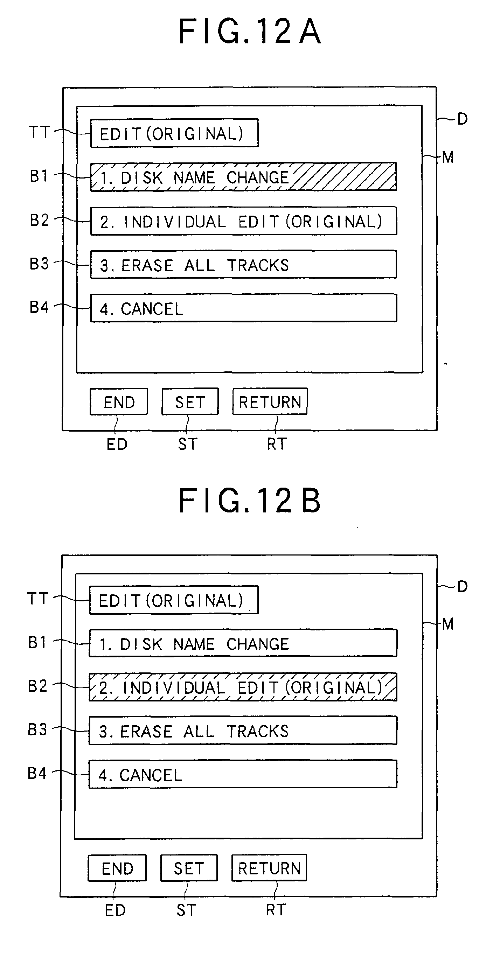

On one hand, a menu screen generating circuit 16 further outputs to still another input terminal of the switch 12 screen information Smn for configuring a setting screen or the like described later (refer to FIG. 12 to FIG. 15) based on the control signal Scm from the system controller 7.

After that, the switch 12 selects any one of the above recording information Sr, the above decoding signal Sd, and the screen information Smn on the basis of a controlling signal Scs from the system controller 7 and outputs it to an exterior amplifier or the like (not illustrated) as an output signal Sout.

Alternatively, in the editorial processing of the embodiment to be described later, the switch 12 is switched to a decoding signal Sd side or the screen information Smn side.

On the other hand, when a user executes an operation for executing processing in the information recording and reproduction apparatus S, the operation unit 15 generates an operating signal Sin that corresponds to the operation, and outputs the signal to the system controller 7 via the timing generator 6. In addition, when the user executes an operation indicating the edit content during processing for editing permission information described later, the operating portion generates an operating signal Scc that corresponds to the operation, and directly outputs the signal to the system controller 7.

Upon performing the divisional editorial processing of the embodiment to be described later, when the operation is performed to divide respective tracks TR, the operation unit 15 generates the operation signal Sin indicating that respective tracks TR are divided in this timing.

Next, upon performing the above divisional editorial processing, the timing generator 6 generates a timing signal Stm indication a timing at which the division should be performed on the basis of the above recording information Sr, the decoding signal Sd and the operation signal Sin output this signal to the navigation information generator 8.

More specifically, the detecting circuit 6A in the timing generator 6 detects the recording information Sr and a silent portion of the decoding signal Sd, and generates a detecting signal Spu to output it to the addition circuit 6B. Then, the addition circuit 6B adds the detecting signal Spu and an operation signal Sh from the operation unit 15, and generates the above timing signal Stm to output it.

Thus, the timing signal Stm is outputted to the navigation information generator 8 at both of a timing that the above dividing operation is performed in the operation unit 15 and a timing that the detecting circuit 6A detects the recording information Sr and the silent portion of the decoding signal Sd.

Alternatively, in the case that the recording information Sr has boundary information showing a boundary of a song in its data, the detecting circuit 6A detects this boundary information.

Thus, the navigation information generator 8 generates the above navigation information signal Snd including the above respective navigation information after the editorial processing on the basis of the timing signal Stm and outputs it to one input terminal of the formatter 4.

As a result, the audio information in the encoding signal Sre and the navigation information in the navigation information signal Snd are superimposed by the above formatter 4, so that the above superimposed signal Sf including the audio information or the like, which has the physical format shown in FIG. 1, is generated.

In parallel with these operations, the system controller 7 gives and receives information necessary as a memory signal Sm to and from the memory 9, generates respective controlling signals Sce, Scf, Ssc, Scd, Scm and Scs for controlling the above respective operations and outputs them to component materials in associated with respective controlling signals.

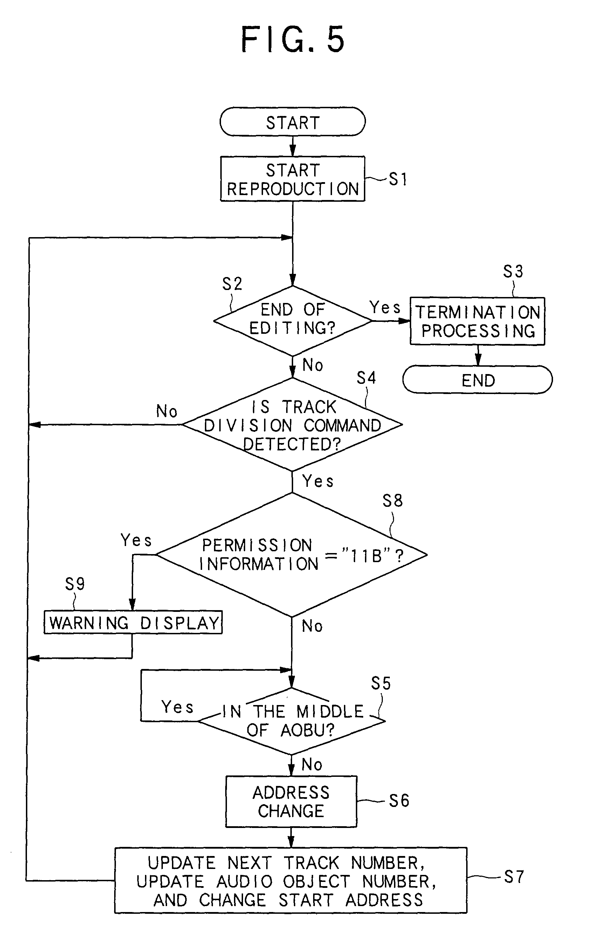

Next, editorial processing of the object recording sequence information OSI according to the embodiment will be explained with reference to FIG. 5 to FIG. 7.

Additionally, the editorial processing to be described below edits the track TR, which is recorded once in the DVD 1 in accordance with the physical format shown in FIG. 1, and the object recording sequence information OSI (refer to FIG. 3) in associated with the track TR so that they are divided after the recording.

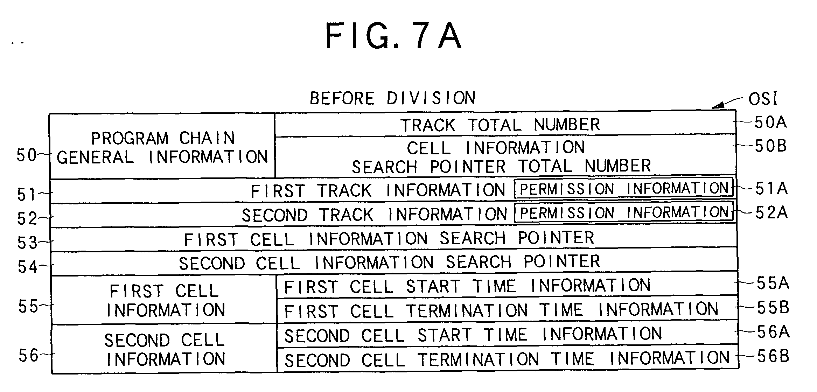

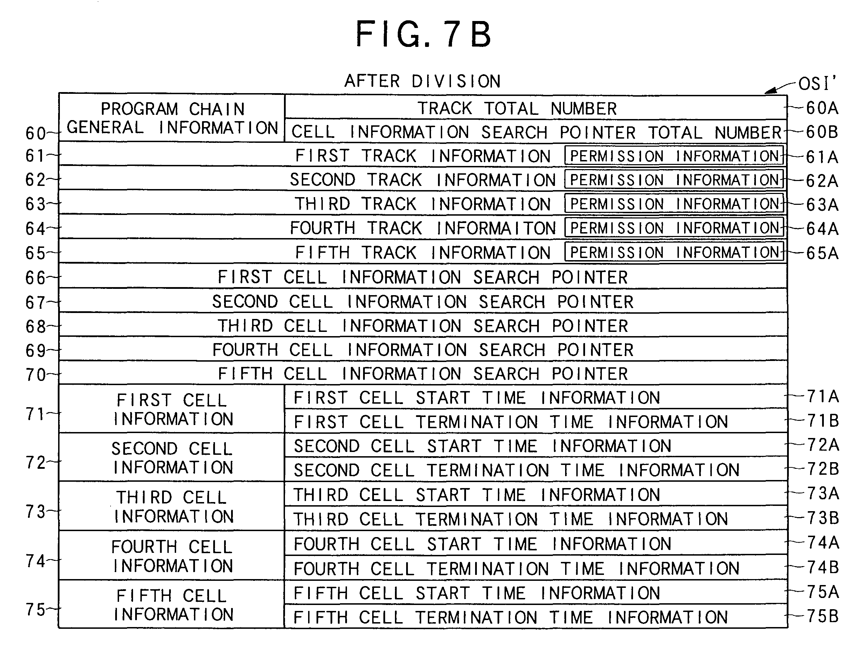

Alternatively, FIG. 5 is a flow chart for showing the editorial processing, which is mainly performed in the system controller 7. FIG. 6 and FIG. 7 are diagrams for specifically illustrating the object recording sequence information OSI before and after the division.

As shown in FIG. 5, according to the editorial processing of the object record sequence information OSI of the present embodiment, at first, reproduction of the audio information, which has been already recorded in the DVD 1 as the track TR (a track TR to be divided), is commenced (step S1). In this case, the switch 12, which has been switched to the decoding signal Sd side, reproduces the audio information via the pickup 2, the demodulator 10, the decoder 11 and the switch 12.

If reproduction of the audio information is commenced, then, it is determined whether the desired dividing processing, i.e., the editorial processing of the object recording sequence information OSI is completed or not (step S2). If it is all completed (step S2; YES), termination processing is performed (step S3) and the editorial processing is terminated. For example, the termination processing includes the processing of recording of the termination information to be recorded in the lead-out area LO or the like.

On one hand, in the determination in the step S2, if all of the editorial processing is not completed (step S2; NO), then, it is determined whether or not the operation signal Sin indicating that the track TR is divided is inputted from the operation unit 15 (step S4). Further, if the operation signal Sin is not inputted (step S4; NO), the processing returns to the step S2 so as to wait until the operation signal Sin is inputted. On the contrary, if it is inputted (step S4; YES), it is judged whether or not the contents of the above permission information (permission information 51A or permission information 52A in an example shown in FIG. 3) is "11b", i.e., whether or not the content indicates that erasure and division of the corresponding track are disabled (step S8).

When the content is "11b" (step S8: YES), it is not enabled that a track in current processing is divided by the subsequent edit processing, and the warning is displayed (step S9). Then, processing reverts to the step S2 at which division processing targeted for the next track is executed. On the other hand, when the content is not "11b" (step S8: NO), it is determined whether or not the division timing indicated by the timing signal Stm in associated with the operation signal Sin is a timing in the middle of reproduction of one audio object unit AOBU (step S5).

Further, if the division timing is a timing in the middle of reproduction of one audio object unit AOBU (step S5; YES), the processing waits until a timing that the reproduction of the audio object unit AOBU is terminated comes since it is assumed that the editorial or deletion processing or the like is not performed in the middle of one audio object unit AOBU as described above.

On the other hand, if the division timing indicated by the timing signal Stm is not a timing in the middle of one audio object unit AOBU (step S5; NO), then, the address information in a recording termination position in the audio object to be reproduced before the division timing in the corresponding object recording sequence information OSI and a reproduction termination time of the cell CL to be reproduced before the division timing are changed on the object recording sequence information OSI (step S6). Simultaneously, updating of a track number of a new track TR, of which the reproduction is commenced after the division timing, and the audio object number and rewriting of the address information of the address information in the recording start position of the new track TR are performed on the object recording sequence information OSI (step S7). Then, at the next division timing, the processing returns to step S2 so as to repeat the same processing.

Next, it is clearly explained how the object recording sequence information OSI is edited in the above editorial processing with reference to FIG. 6 and FIG. 7.

In the following description, the above described divisional edit processing is repeated, whereby, with respect to audio information on the DVD 1 having a logical format similar to a case shown in FIG. 3A, as an example, the first track 20 is divided into a first track 30, of which reproduction time is just 10 minutes, and a second track 31, of which reproduction time is 9 minutes, 59 seconds and 2 frames. Simultaneously, the second track 21 is divided into a third track 32, of which reproduction time is just 15 minutes, a fourth track 33, of which reproduction time is just 10 minutes, and a fifth track 34, of which reproduction time is 9 minutes, 59 seconds and 29 frames.

With respect to the logical format before and after division, it has a correlation similar to a case shown in FIG. 3B before divided. In addition, after divided, a first audio object 35 and a first cell 40 are associated with the first track 30, a second audio object 36 and a second cell 41 are associated with the second track 31, a third audio object 37 and a third cell 42 are associated with the third track 32, a fourth audio object 38 and a fourth cell 43 are associated with the fourth track 33, and a fifth audio object 39 and a fifth cell 44 are associated with the fifth track 34, respectively.

First, with respect to the content of the object record sequence information OSI that corresponds to audio information before divided, as shown in FIG. 7A, there is formed object record sequence information OSI having the content similar to the above case described with reference to FIG. 3B.

Next, by referring to FIG. 7B, a description is given with respect to the content of object record sequence information OSI' after each track TR corresponding to the object record sequence information OSI shown in FIG. 7A has been divided by the above divisional edit processing shown in FIG. 5 in a mode exemplified in FIG. 6.

As shown in FIG. 7B, after division illustrated in FIG. 6, the object recording sequence information OSI' includes a program chain general information 60, first track information 61 (its value is "1"), second track information 62 (its value is "1"), third track information 63 (its value is "1"), fourth track information 64 (its value is "1"), fifth track information 65 (its value is "1"), first cell information search pointer 66, second cell information search pointer 67, third cell information search pointer 68, fourth cell information search pointer 69, fifth cell information search pointer 70, first cell information 71, second cell information 72, third cell information 73, fourth cell information 74 and fourth cell information 75. The program chain general information 60 includes a track total number 60A (its value is "5"), in which the total number of the tracks TR recorded in the DVD 1 is described, and a cell information search pointer total number 60B (its value is "5"), in which the total number of the corresponding cell information search pointers is described. The total number of the cells CL included in the first track 30 after division is described in the first track information 61. The total number of the cells CL included in the second track 31 after division is described in the second track information 62. The total number of the cells CL included in the third track 32 after division is described in the third track information 63. The total number of the cells CL included in the fourth track 33 after division is described in the fourth track information 64. The total number of the cells CL included in the fifth track 34 after division is described in the fifth track information 65. A recording position on the DVD 1, in which the first cell information 71 to be described later is described, is described in the first cell information search pointer 66. A recording position on the DVD 1, in which the second cell information 72 to be described later is described, is described in the second cell information search pointer 67. A recording position on the DVD 1, in which the third cell information 73 to be described later is described, is described in the third cell information search pointer 68. A recording position on the DVD 1, in which the fourth cell information 74 to be described later is described, is described in the fourth cell information search pointer 69. A recording position on the DVD 1, in which the fifth cell information 75 to be described later is described, is described in the fifth cell information search pointer 70. The first cell information 71 includes first cell start time information 71A (its value is "0 minute, 0 second and 0 frame), in which a reproduction start time of the first cell 40 after division is described, and first cell termination time information 71B (its value is "10 minutes, 0 second and 0 frame), in which a reproduction termination time of the first cell 40 is described. The second cell information 72 includes first cell start time information 72A (its value is "10 minutes, 0 second and 0 frame), in which a reproduction start time of the second cell 41 after division is described, and second cell termination time information 72B (its value is "19 minutes, 59 seconds and 2 frames), in which a reproduction termination time of the second cell 41 is described. The third cell information 73 includes third cell start time information 73A (its value is "0 minute, 0 second and 0 frame), in which a reproduction start time of the third cell 42 after division is described, and third cell termination time information 73B (its value is "15 minutes, 0 second and 0 frame), in which a reproduction termination time of the third cell 42 is described. The fourth cell information 74 includes fourth cell start time information 74A (its value is "15 minutes, 0 second and 0 frame), in which a reproduction start time of the fourth cell 43 after division is described, and fourth cell termination time information 74B (its value is "25 minutes, 0 second and 0 frame), in which a reproduction termination time of the fourth cell 43 is described. The fifth cell information 75 includes fifth cell start time information 75A (its value is "25 minutes, 0 second and 0 frame), in which a reproduction start time of the fifth cell 44 after division is described, and fifth cell termination time information 75B (its value is "29 minutes, 59 seconds and 29 frames), in which a reproduction termination time of the fifth cell 44 is described.

If the editorial processing shown in FIG. 5 is performed again, the object recording sequence information OSI' shown in FIG. 7B is newly updated and recorded by the same processing as the processing such that the object recording sequence information OSI' is generated from the object recording sequence information OSI.

In addition, each permission information after divided is contained in the corresponding track information for each track as indicated by reference numerals 61A to 65A in FIG. 7B. However, the content of each of the permission information 61A to 65A is the same as that of permission information 51A before divided. Permission information 63A to 65A have the same contents as permission information 52A before divided.

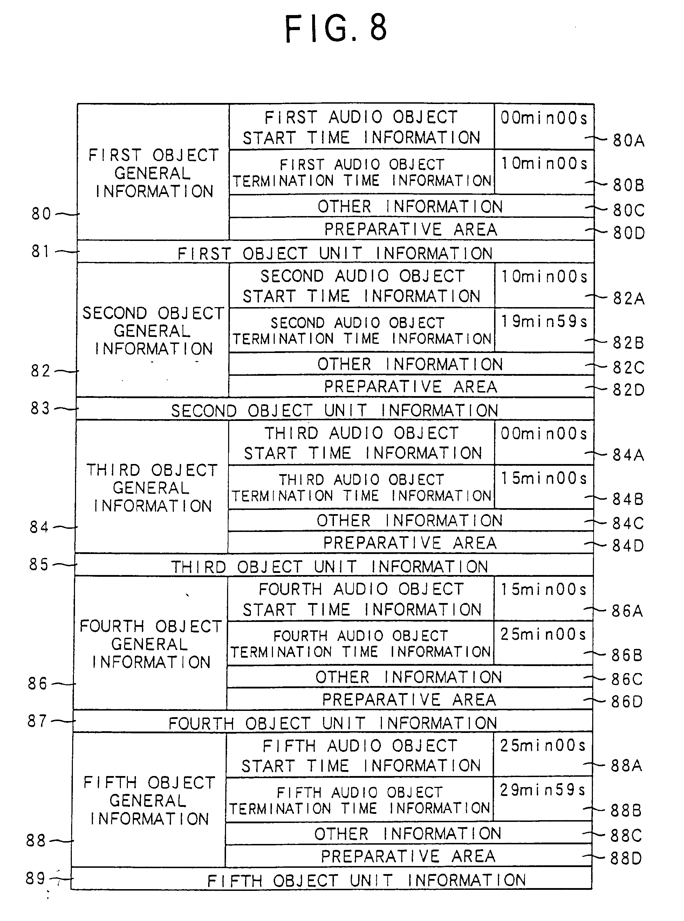

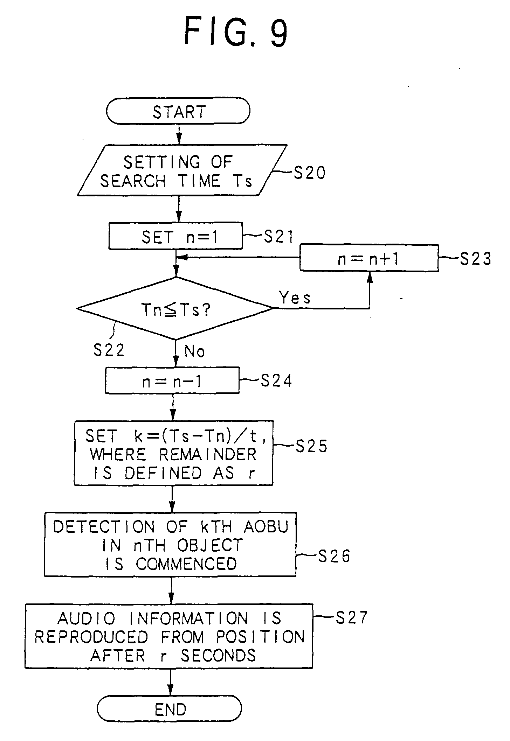

Next, the processing in the case of reproducing the audio information, which is recorded as respective tracks TR divided by the editorial processing according to the above described embodiment, will be described with reference to FIG. 8 and FIG. 9.

Alternatively, the reproduction processing is performed by the information recording reproduction apparatus S under control of the system controller 7 on the basis of the above object file information OFI or the like, which is generated after division.

Additionally, FIG. 8 is a diagram for explaining contents of the above object file information OFI, which is generated after the editorial processing, taking the cases shown in FIG. 6 and FIG. 7B as examples. FIG. 9 is a flow chart for showing the reproduction processing.

At first, the contents of the above object file information OFI after division will be described with reference to FIG. 8.

The object file information OFI, which is generated after the tracks TR are divided in embodiment shown in FIG. 6 and FIG. 7B, includes first object general information 80, first object unit information 81, second object general information 82, second object unit information 83, third object general information 84, third object unit information 85, fourth object general information 86, fourth object unit information 87 and fifth object general information 88 and fifth object unit information 89. The first object general information 80 is comprised of reproduction start time information 80A (its value is "0 minute and 0 second") of the first audio object 35 after division, reproduction termination time information 80B (its value is "10 minutes and 0 second") of the first audio object 35, other information 80C including other information necessary for reproduction of the first audio object 35, and a preparative area 80D. The first object unit information 81 is the above object unit information in associated with the first audio object 35. The second object general information 82 is comprised of reproduction start time information 82A (its value is "10 minutes and 0 second") of the second audio object 36 after division, reproduction termination time information 82B (its value is "19 minutes and 59 seconds") of the second audio object 36, other information 82C including other information necessary for reproduction of the second audio object 36, and a preparative area 82D. The second object unit information 83 is the above object unit information in associated with the second audio object 36. The third object general information 84 is comprised of reproduction start time information 84A (its value is "0 minute and 0 second") of the third audio object 37 after division, reproduction termination time information 84B (its value is "15 minutes and 0 second") of the third audio object 37, other information 84C including other information necessary for reproduction of the third audio object 37, and a preparative area 84D. The third object unit information 85 is the above object unit information in associated with the third audio object 37. The fourth object general information 86 is comprised of reproduction start time information 86A (its value is "15 minutes and 0 second") of the fourth audio object 38 after division, reproduction termination time information 86B (its value is "25 minutes and 0 second") of the fourth audio object 38, other information 86C including other information necessary for reproduction of the fourth audio object 38, and a preparative area 86D. The fourth object unit information 87 is the above object unit information in associated with the fourth audio object 38. The fifth object general information 88 is comprised of reproduction start time information 88A (its value is "25 minutes and 0 second") of the fifth audio object 39 after division, reproduction termination time information 88B (its value is "29 minutes and 59 seconds") of the fifth audio object 39, other information 88C including other information necessary for reproduction of the fifth audio object 39, and a preparative area 88D. The fifth object unit information 89 is the above object unit information in associated with the fifth audio object 39.

Next, reproduction processing of an embodiment by the use of the object file information OFI or the like illustrated in FIG. 8 will be described with reference to FIG. 9.

Alternatively, the switch 12 is switched to the decoding signal Sd side when the reproduction processing is performed.

Additionally, reproduction processing explained below is reproduction processing for searching a position after a time of Ts seconds from a head of the data area DA in the DVD 1 as a reproduction time and reproducing the audio information recorded in this position. In this case, reproduction time in associated with one audio object unit AOBU is assumed to be t seconds.

As shown in FIG. 9, according to the reproduction processing, at first, when the reproduction time Ts is designated by the user (step S20), a parameter n indicating the number of the audio object is set to "1" (step S21). The number is a continuous number in the case that the number of the audio object recorded in a head of the data area DA is assumed to be "1". Then, the reproduction time Tn at the head of the audio object to be illustrated by the parameter n is compared with the above reproduction time Ts (step S22).

If the reproduction time Tn is ahead of the reproduction time Ts (step S22; YES), it is assumed that the irradiating position of the optical beam B does not reach a desired reproduction position. Then, the parameter n is increased by "1" (step S23) and the processing returns to the step S22.

On one hand, if it is determined that the reproduction time Tn is behind of the reproduction time Ts in the step S22 (Step S22; NO), it is assumed that the irradiating position of the optical beam B passes the desired reproduction position by one audio object. Then, the parameter n is decreased by "1" (step S24). Therefore, a n-th audio object obtained by this processing is an audio object including the reproduction time Ts. Next, difference between the reproduction time Tn and the reproduction time Ts is divided by the reproduction time t of one audio object unit AOBU and its quotient is defined as k and its remainder is defined as r (step S25).

According to this processing in the step S25, it is perceived that the desired reproduction time Ts is equivalent to a position after r seconds from the head of the k-th audio object unit AOBU in the n-th audio object.

Next, detection of the k-th audio object unit AOBU is commenced (step S26). Further, the audio information is reproduced from a position after r seconds from the above position (step S27) and the processing is terminated.

### (III) Embodiment of Divisional Record Processing

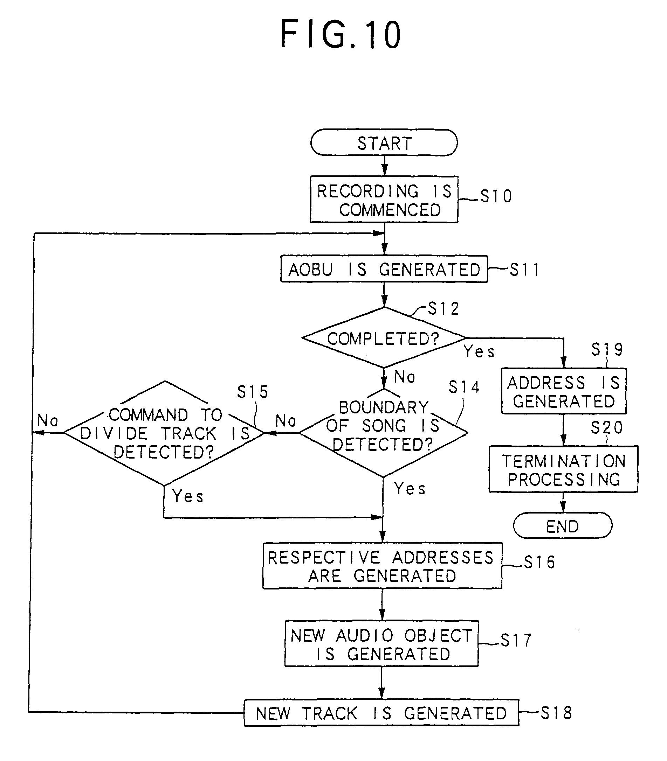

Now, embodiments of divisional record processing according to the present invention will be described with reference to FIG. 10. FIG. 10 is a flow chart showing the divisional record processing.

In the divisional edit processing described previously, a description has been given with respect to divisional edit processing for dividing a track TR while reproducing audio information that has been recorded together with the permission information. In the following description, when a series of the audio information is recorded for DVD 1 in which no audio information is recorded, the audio information is divided, and is recorded while permission information is incorporated.

In the divisional record processing of the embodiment, as shown in FIG. 10, when DVD 1 recording of the audio information externally inputted is started (step S10), an audio object unit AOBU is created by the above described processing, and is recorded in the DVD 1 (step S11).

Then, it is judged whether or not all the audio information has been recorded (step S12). When all record processing terminates (step S12: NO), it is judged whether or not the boundary between music tunes in record information Sr has been detected (step S14).

At this time, during the processing at the step S14, the boundary is detected at a timing at which the detecting circuit 6A in the timing generator 6 has detected a silent portion of record information Sr.

When it is judged at the step S14 that the boundary between music tunes has been detected (step 14: YES), address information at the record end position in an audio object to be reproduced before the boundary timing in the corresponding object record sequence information OSI and the reproduction end time of a cell CL to be reproduced before the boundary timing are newly created as the object record sequence information OSI (step S16). Further, a new audio object and a new track TR are created for audio information to be recorded up to the boundary (steps S17 and S18). Then, processing reverts to the step S11 at which similar processing is repeated at the next forthcoming boundary timing.

On the other hand, when it is judged at the step S14 that the boundary between music tunes has not been detected (step S14: NO), it is judged whether or not an operating signal Sin for dividing a track TR that has been formed up to that time is inputted from the operation unit 15 (step S15). When the operating signal Sin is not inputted (step S15: NO), processing goes to the step S11 again. Otherwise, when it is inputted (step S15: YES), processing goes to the step S16 at which the above described subsequent processing is executed.

On the other hand, when it is judged at the step S12 that all record processing has terminated (step S12: YES), the address information at the recording end position in the final audio object and the reproduction end time at the final cell CL are created as the object recording sequence information OSI (step S19). Then, preset termination processing (for example, recording of end information to be recorded in the lead-out area LO, or the like) is performed, and the above permission information that corresponds to all the tracks is generated so that the its content is set to "00b (that is, both of erasure and division are enabled)", for example, (step S20), and record processing is terminated.

Here, as object record sequence information OSI generated after executing divisional record processing shown in FIG. 10, the information as exemplified in FIG. 7A is created at the same time as divisional record processing. In this case, in the audio information to be recorded, it is judged that the boundary between music tunes has been detected only 10 minutes and 0 seconds after the recording has been started.

Depending on the content of audio information recorded in the DVD 1, the content of the permission information newly formed at the step S20 may be set to "10b (that is, erasure is prohibited and division is permitted)" or "11 B (that is, erasure and division are prohibited)".

### (IV) Embodiments of Permission information Change Processing

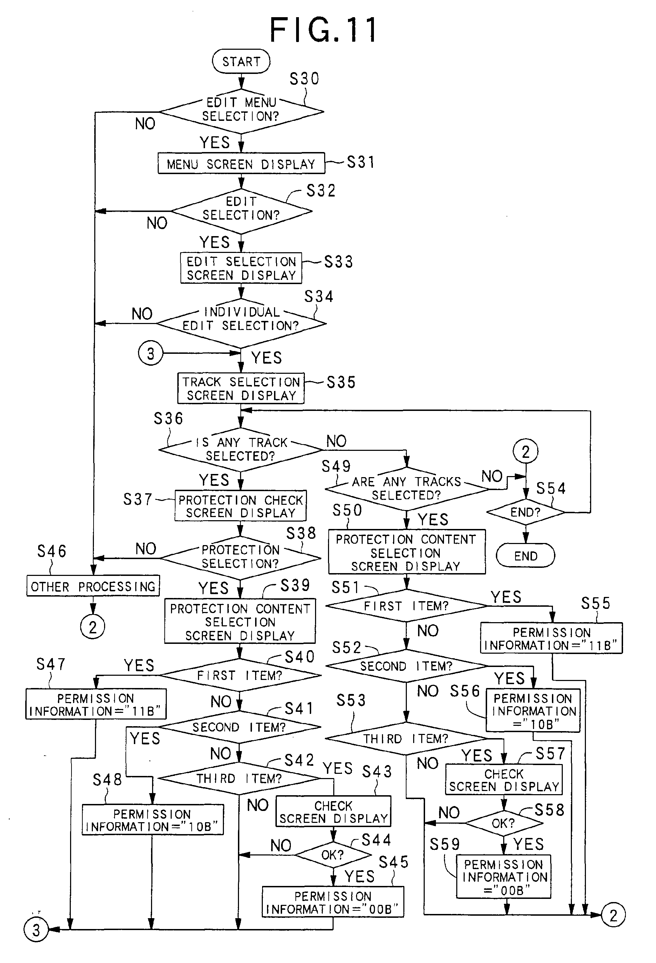

Now, the embodiments of permission information change processing in which the content of permission information according to the present invention is changed on the DVD 1, will be described with reference to FIG. 11 to FIG. 15.

FIG. 11 is a flow chart showing the change processing. FIG. 12 to FIG. 15 are examples of setting screens employed for the change processing.

In the above described divisional edit processing or divisional record processing, processing for changing the content of permission information itself is not done. However, in the information recording and reproduction apparatus S of the embodiment, it is possible to change the content of the permission information itself by the user's discretion.

In the permission information change processing of the embodiment, as shown in FIG. 11, an operation for selecting an edit menu screen for changing the permission information is executed at the operation unit 15, and it is judged whether or not the corresponding operating signal "Scc" has been inputted (step S30).

When the edit menu screen is not selected (step S30: NO), the other selected processing is executed (step S46), and processing goes to the step S54.

On the other hand, when it is judged at the step S30 that the edit menu screen has been selected (step S30: YES), the corresponding menu screen is displayed by employing screen information Smn generated by the above described menu screen generating circuit 16 (step S31).

When the edit menu screen is displayed, it is judged whether or not edit processing for editing object record sequence information OSI or the like containing the above permission information on the edit menu screen has been selected (step S32). When the edit processing is not selected (step S32: NO), the other selected processing is executed (step S45), and processing goes to the step S54.

On the other hand, when it is judged at the step S32 that the edit processing has been selected (step S32: YES), the corresponding edit selection screen is displayed (step S33).

Here, the edit selection screen M displayed on a display D (not shown in FIG. 4), as exemplified in FIG. 12A, specifically contains a title TT; a button B1 to be operated when processing for changing a name assigned to DVD 1 itself is started; a button B2 to be operated when edit processing for each track containing change processing of the permission information according to the embodiment; a button B3 to be operated when all the tracks on the DVD 1 is erased, and another track is newly recorded; a button B4 to be operated when the past processing is cancelled; an end button ED to be operated when processing is terminated; a set button ST to be operated when the selected content is determined; and a return button RT to be operated when the screen reverts to a immediately preceding selection screen. Each button is intended to change a display mode so as to be displayed in reverse video, for example, when such each button is selected.

When an edit selection screen M is displayed, it is judged whether or not the above button B2 has been selected on the edit selection screen M (step S34: Refer to FIG. 12B). When the button B2 is not selected (step S34: NO), processing corresponding to the other buttons B1, B3 or B4 on the other selected edit selection screen M is executed (step S46), and processing goes to the step S54.

On the other hand, when it is judged at the step S34 that the button B2 has been selected, and individual edit processing for each track is selected (step S34: YES), the corresponding track selection screen is displayed (step S35).

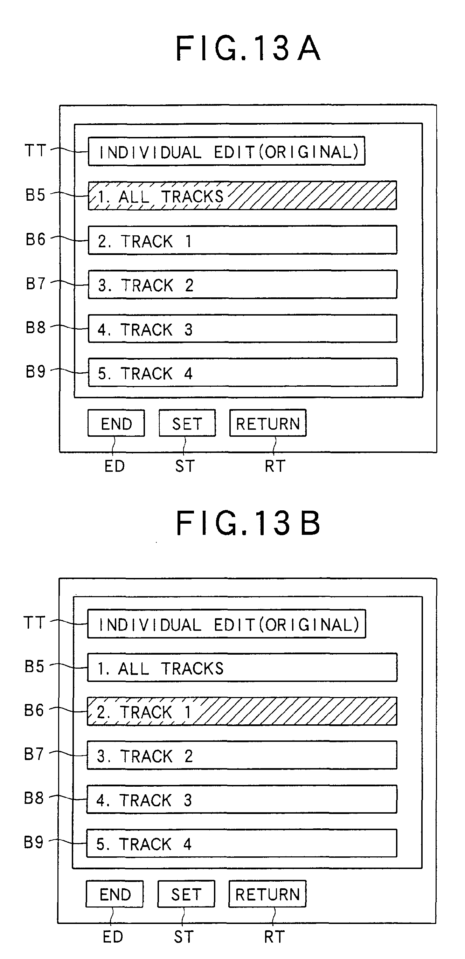

The track selection screen MD displayed on the display D, as exemplified in FIG. 13A, specifically contains a title TT; a button B5 to be operated when all tracks currently recorded on the DVD 1 are collectively selected; buttons B5 to B9 to be operated when tracks recorded on the DVD 1 are individually selected (a total number of tracks is 4 in a case shown in FIG. 13A); the end button ED; the set button ST; and the return button RT.

When a truck selection screen MD is displayed, it is judged that only one track has been selected on the track selection screen MD ((step S36).

When any one track has been selected (step S36: YES. Refer to FIG. 13B (when a second track is selected)), there is displayed a protection check screen for checking a protection state in that track (that is, a state in which the track is protected from erasure processing or divisional processing) (step S37).

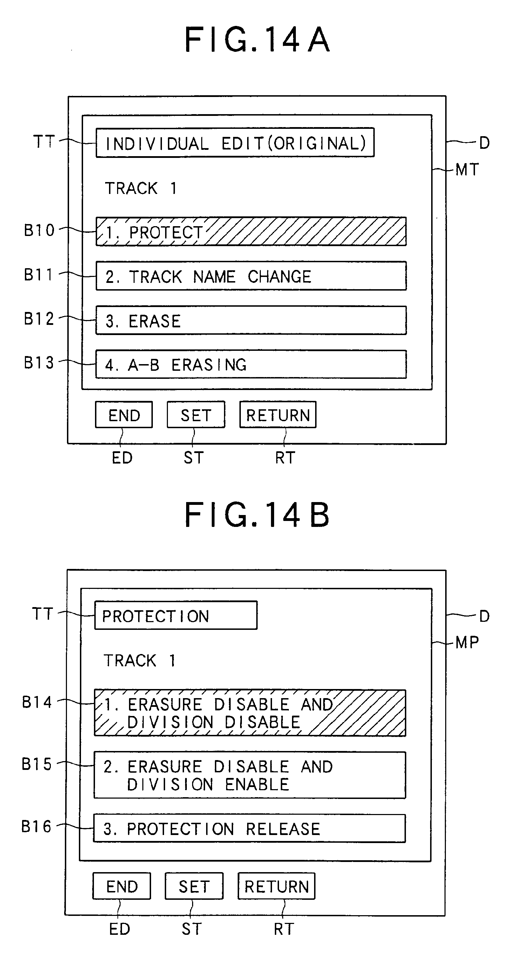

Here, the protection check screen MT displayed on the display D, as exemplified in FIG. 14A, specifically contains a title TT; a button B10 to be operated when the protection state of each track is changed; a button B11 to be operated when the name of each track is changed; a button B12 to be operated when tracks are individually erased; a button B13 to be operated when only part in each track is erased (between positions a and B in each track in a case shown in FIG. 14); the above end button ED; a set button ST; and a button RT.

When the protection check screen MT is displayed, it is judged whether or not a change of the protection state of a track (button B10) has been selected on the protection check screen MT (step S38. Refer to FIG. 14A).

When the button B10 is not selected (step S38: NO), processing corresponding to the other buttons B11 to B13 on the other selected protection check screen MT is executed (step S46), and processing goes to the step S54.

On the other hand, when the button B10 is selected (step S38: YES. Refer to FIG. 14A), a protection content selection screen for selecting a protection state in that track is displayed (step S39).

Here, the protection content selection screen MP displayed on the display D, as exemplified in FIG. 14B, specifically contains: a title TT; a button B14 to be operated when it is disabled that the content of permission information is erased and divided (that is, the content is changed to "11b"); a button B15 to be operated when it is disabled that the content of permission information is erased and divided (that is, the content is changed to "10b"); a button B16 to be operated when it is enabled that the content of permission information is erased and divided (that is, the content is changed to 00b); the above end button ED, the set button ST, and the return button RT.

When the protection content selection screen MP is displayed, it is judged whether or not the button B14 has been selected on the protection content selection screen MP (step S40).

When the button B14 has been selected (step S40: YES. Refer to FIG. 14B), the content of the permission information (Refer to FIG. 3B or FIG. 7) contained in the corresponding track information is changed to "11b" (step S47). Then, processing reverts to the step S35 at which the above described processing is repeated for the next track.

On the other hand, when it is judged at the step S40 that the button B14 has not been selected (step S40: NO), it is judged whether or not the button B15 has been selected on the protection content selection screen MP (step S41).

When the button B15 has been selected (step S41: YES), the content of the permission information contained in the corresponding track information is changed to "10b" (step S48). Then, processing reverts to the step S35 at which the above described processing is repeated for the next track.

Further, when it is judged at the step S41 that the button B15 has not been selected (step S41: NO), it is judged whether or not the button B16 has been selected on the protection content selection screen MP (step S42).

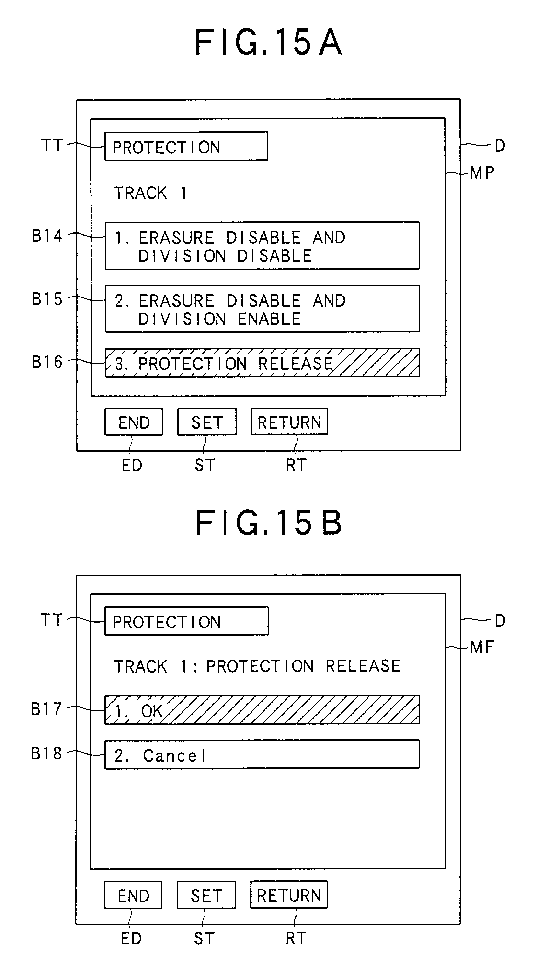

When the button B16 has been selected (step S42: YES. Refer to FIG. 15A.), a check screen for checking whether or not protection of the truly corresponding track is released is displayed (step S43).

Here, the check screen MF displayed on the display D, as exemplified in FIG. 15B, specifically contains: a title TT; a button B17 to be operated when protection is released, that is, when it is enabled that the track is erased and divided; a button B18 to be operated when such protection release is not executed; the above end button ED; the set button St; and the return button RT.

When the check screen MF is displayed, it is judged whether or not the button B17 has been selected on the check screen MF (step S44).

When the button B17 has been selected (step S44: YES. Refer to FIG. 15B), the content of permission information contained in the corresponding track information is changed to 00b (step S45). Then, processing reverts to the step S35 at which the above described processing is repeated for the next track.

On one hand, when it is judged at the step S44 that the button B17 has not been selected (step S44: NO), processing reverts to the step S35 at which the above described processing is repeated for the next track.

On the other hand, when it is judged at the step S36 that any one track has not been selected (step S36: NO), it is judged whether or not the button B5 has been selected on the track selection screen MD (step S49).

When the button B5 has not been selected, it is judged whether or not the end button ED has been selected (step S54). When the button has been selected (step S54: YES), processing is terminated. When the button has not been selected (step S54: NO), processing reverts to the step S36 at which a display for prompting track selection is provided to a user.

When it is judged at the step S49 that the button B5 has been selected, that is, when the user makes a selection for executing editing of permission information or the like by one operation for all the tracks on the DVD 1 (step S49: YES), a protection content selection screen for selecting the protection state in all the tracks is displayed (step S50).

Specifically, the protection content selection screen is displayed on the display D, assuming that the protection content selection screen MP shown in FIG. 14B is targeted for all the tracks. Hereinafter, the protection content selection screen is referred to as a protection content selection screen MP'.

When the protection content selection screen MP' is displayed, it is judged whether or not the button B14 has been selected on the protection content selection screen MP' (step S51).

When the button B14 has been selected (step S51: YES. Refer to FIG. 14B.), the content of the permission information contained in all the track information is changed to "11b" (step S55), and processing goes to the step S54.

On the other hand, when it is judged at the step S51 that the button B14 has not been selected (step S51: NO), it is judged whether or not the button 15 has been selected on the protection content selection screen MP' (step S52).

When the button B15 has been selected (step S52: YES), the content of the permission information contained in all the track information is changed to "10b" (step S56), and processing goes to the step S54.

Further, when it is judged at the step S52 that the button B15 has not been selected (step S52: NO), it is judged whether or not the button B16 has been selected on the protection content selection screen MP' (step S53).

When the button B16 has been selected (step S53: YES. Refer to FIG. 15A.), a check screen for checking whether or not protection of all tracks is truly released is displayed (step S57).

Specifically, the check screen is displayed on the display D, assuming that the check screen MF shown in FIG. 15B is targeted for all the tracks. Hereinafter, the check screen is referred to as a check screen MF'.

When the check screen MF' is displayed, it is judged whether or not the button B17 has been selected on the check screen MF' (step S58).

When the button B17 has been selected (step S58: YES. Refer to FIG. 15B.), the content of the permission information contained in all the track information is changed to "00b" (step S59), and processing goes to the step S54.

On the other hand, when it is judged at the step S58 that the button B17 has not been selected (step S58: NO), processing goes to the step S54.

As has been described above, in operation of the information recording and reproduction apparatus S according to each of the embodiments, permission information 51A, 52A or the like indicating whether or not it is enabled that any of the tracks is further divided is recorded on the DVD 1, thus making it possible to permit or prohibit each of the tracks to be further divided.

In addition, permission information 51A, 52A or the like can be changed, thus making it possible to freely set whether or not to further divide each track.

Further, divisional edit processing is executed only when the contents of the permission information 51A, 52A and the like are directed to the contents of enabling divisional processing. Thus, undesired track division can be prevented from being executed.

A division timing is specified, and further, permission information 61A, 62A and the like having the same contents as before division are generated and recorded for each track. Thus, when divisional edit processing is enabled, each track can be divided at an arbitrary division timing.

One music tune in audio information can be divided and recorded, and further, can be reproduced.

In addition, a recording medium is directed to a DVD capable of information recording, thus, making it possible to record a large amount of record information while controlling whether or not division is enabled.

The present invention is not limited to each of the above described embodiments.

That is, for example, in the processing shown in FIG. 5, a description has been given with respect to a case in which an audio object is divided when an operating signal Sin for dividing a track TR from an operation unit 15 has been inputted. Otherwise, an audio object may be automatically divided in response to the fact that a detector 6A has detected a silent portion of a decoding signal Sd.

In each of the above described embodiments, a description has been given with respect to a case in which the present invention is applied to an audio DVD recorder employing audio DVD specifications. Otherwise, the present invention can be applied to a video DVD recorder employing video DVD specifications.

In this case, the above permission information is preferably recorded as manufacture's information (manufacturers Information Data in a Manufacturers Information packet) that exists in a lower layer of the RDI data contained in an RDI (Real-time Data Information) in the video DVD specifications.

Further, programs corresponding to the flow charts shown in FIG. 5, FIG. 9, FIG. 10, and FIG. 11 are recorded in an information recording medium such as flexible disk or hard disk. Then, these programs are read out and executed by a personal computer or the like, thereby making it possible to cause the personal computer to function as a system controller 7 in the above information recording and reproduction apparatus S.

The invention may be embodied in other specific forms without departing from the spirit or essential characteristics thereof. The present embodiments are therefore to be considered in all respects as illustrative and not restrictive, the scope of the invention being indicated by the appended claims rather than by the forgoing description and all changes which come within the meaning and range of equivalency of the claims are therefore intended to be embraces therein.

## Claims

1. An information recording apparatus (S) for recording information in a recording medium (1), **characterized in that** said apparatus comprising:
a specification device (15) for specifying a division timing in the recording information;
a recording device (2) for recording in said recording medium front part record information that is the record information before said specified division timing and rear part record information that is the record information after said specified division timing;
a generation device (7) for generating permission information (51A, 52A) indicating whether or not to permit at least one of said front part record information and said rear part record information to be further divided; and
an permission information recording device (7) for recording said generated permission information in said recording medium.

2. The information recording apparatus (S) according to claim 1, wherein said permission information takes any one of:
a first state in which it is enabled that at least either one of said front part record information and said rear part record information is erased from said recording medium after recorded, and that said at least one is further divided;
a second state in which it is disabled that said at least one is erased from said recording medium after recorded, but it is enabled that said at least one is further divided; and
a third state in which it is disabled that said at least one is erased from said recording medium after recorded, and that said at least one is further divided.

3. The information recording apparatus (S) according to claim 1 or 2, wherein the apparatus further comprises:
a detection device (2) for detecting from the recording medium said permission information recorded in said recording medium;
a change device (7) for changing the content of said detected permission information; and
an overwrite device (7) for overwriting said changed permission information on said recording medium.

4. An information recording apparatus (S) characterize in that: the apparatus comprises:
an permission information detection device (2) for detecting the permission information (51A, 52A) from a recording medium (1) having record information and permission information indicating whether or not to permit execution of edit processing for dividing the record information into two or more items of partial record information recorded therein;
a judgment device (7) for judging the content of the detected permission information; and
an execution device (7) for, only when said judged content corresponds to the content in which said division processing is enabled, executing said edit processing.

5. The information recording apparatus (S) according to claim 4, wherein said permission information takes any one of:
a first state in which it is enabled said partial record information after divided is erased from said recording medium, and that the partial record information is further divided;
a second state in which it is disabled that said partial record information after divided is erased from said recording medium, but it is enabled that the partial record information is further divided; and
a third state in which it is disabled that said partial record information after divided is erased from said recording medium, and that the partial record information is further divided.

6. The information recording apparatus (S) according to claim 4 or 5, wherein said execution device (7) comprises:
a specification device (15) for specifying a division timing to divide the record information;
a division device (7) for dividing said record information into front part record information that is said record information before said specified division timing and rear part record information that is said record information after said specified division timing; and
an permission information recording device (7) for generating permission information having the same content as said permission information recorded in said recording medium before divided, relevant to each of said front part record information and said rear part record information, and then, recording the information in said recording medium.

7. The information recording apparatus (S) according to any one of claims 1 to 6, wherein said record information comprises audio information that contains at least music information and voice information.

8. The information recording apparatus according to any one of claims 1 to 7, wherein said recording medium (1) comprises a DVD capable of information recording.

9. An information recording method for recording information in a recording medium (1), **characterized in that** said method comprises:
a specification process of specifying a division timing in the recording information;
a recording process of recording in said recording medium front part record information that is the record information before said specified division timing and rear part record information that is the record information after said specified division timing;
a generation process of generating permission information (51A, 52A) indicating whether or not to permit at least one of said front part record information and said rear part record information to be further divided; and
a permission information recording process of recording said generated permission information in said recording medium.

10. The information recording method according to claim 9, wherein said permission information takes any one of:
a first state in which it is enabled that at least either one of said front part record information and said rear part record information is erased from said recording medium after recorded, and that said at least one is further divided;
a second state in which it is disabled that said at least one is erased from said recording medium after recorded, but it is enabled that said at least one is further divided; and
a third state in which it is disabled that said at least one is erased from said recording medium after recorded, and that said at least one is further divided.

11. The information recording method according to claim 9 or 10, wherein the method further comprises:
a detection process of detecting from the recording medium said permission information recorded in said recording medium;
a change process of changing the content of said detected permission information; and
an overwrite process of overwriting said changed permission information on said recording medium.

12. An information recording method **characterized in that** the method comprises:
an permission information detection process of detecting the permission information (51A, 52A) from a recording medium (1) having record information and permission information indicating whether or not to permit execution of edit processing for dividing the record information into two or more items of partial record information recorded therein;
a judgment process of judging the content of the detected permission information; and
an execution process of, only when said judged content corresponds to the content in which said division processing is enabled, executing said edit processing.

13. The information recording method according to claim 12, wherein said permission information (51A, 52A) takes any one of:
a first state in which it is enabled said partial record information after divided is erased from said recording medium, and that the partial record information is further divided;
a second state in which it is disabled that said partial record information after divided is erased from said recording medium, but it is enabled that the partial record information is further divided; and
a third state in which it is disabled that said partial record information after divided is erased from said recording medium, and that the partial record information is further divided.

14. The information recording method according to claim 12 or 13, wherein said execution process comprises:
a specification process of specifying a division timing to divide the record information;
a division process of dividing said record information into front part record information that is said record information before said specified division timing and rear part record information that is said record information after said specified division timing; and
an permission information recording process of generating permission information (51A, 52A) having the same content as said permission information recorded in said recording medium before divided, relevant to each of said front part record information and said rear part record information, and then, recording the information in said recording medium.

15. An information recording medium (1) **characterized in that** the medium comprises:
a record information area having one or plural items of recording information recorded therein; and
an permission information recording region (51, 52) having permission information (51A, 52A) indicating whether or not to permit execution of edit processing for dividing said each item of recording information into one or more items of partial record information.

16. The recording medium (1) according to claim 15, wherein said permission information (51A, 52A) takes any one of:
a first state in which it is enabled said partial record information after divided is erased from said recording medium, and that the partial record information is further divided;
a second state in which it is disabled that said partial record information after divided is erased from said recording medium, but it is enabled that the partial record information is further divided; and
a third state in which it is disabled that said partial record information after divided is erased from said recording medium, and that the partial record information is further divided.

17. An information recording medium having recorded therein a recording control program for functioning a recording computer contained in an information recording apparatus (S) for recording target record information in a recording medium (1), **characterized in that** said recording control program causes said recording computer to function as:
a specification device (15) for specifying a division timing in the recording information;
a recording device (2) for recording in said recording medium front part record information that is the record information before said specified division timing and rear part record information that is the record information after said specified division timing;
a generation device (7) for generating permission information (51A, 52A) indicating whether or not to permit at least one of said front part record information and said rear part record information to be further divided; and
an permission information recording device (7) for recording said generated permission information in said recording medium.

18. The information recording medium according to claim 17, wherein said permission information takes any one of:
a first state in which it is enabled that at least either one of said front part record information and said rear part record information is erased from said recording medium after recorded, and that said at least one is further divided;
a second state in which it is disabled that said at least one is erased from said recording medium after recorded, but it is enabled that said at least one is further divided; and
a third state in which it is disabled that said at least one is erased from said recording medium after recorded, and that said at least one is further divided.

19. The information recording medium according to claim 17 or 18, wherein said recording control program causes said recording computer to further function as:
a detection device (2) for detecting from the recording medium said permission information recorded in said recording medium;
a change device (7) for changing the content of said detected permission information; and
an overwrite device (2) for overwriting said changed permission information on said recording medium.

20. An information recording medium having a recording control program recorded therein, said recording control program causing a recording computer contained in an information recording apparatus (S) to function as:
an permission information detection device (2) for detecting the permission information (51A, 52A) from a recording medium (1) having record information and permission information indicating whether or not to permit execution of edit processing for dividing the record information into two or more items of partial record information recorded therein;
a judgment device (7) for judging the content of the detected permission information; and
an execution device (7) for, only when said judged content corresponds to the content in which said division processing is enabled, executing said edit processing.

21. The information recording medium having said recording control program recorded therein according to claim 20, wherein said permission information (51A, 52A) takes any one of:
a first state in which it is enabled said partial record information after divided is erased from said recording medium, and that the partial record information is further divided;
a second state in which it is disabled that said partial record information after divided is erased from said recording medium, but it is enabled that the partial record information is further divided; and
a third state in which it is disabled that said partial record information after divided is erased from said recording medium, and that the partial record information is further divided.

22. The information recording medium having said recording control program recorded therein according to claim 20 or 21, wherein said recording control program causes said recording computer that functions as said execution device to further function as:
a specification device (15) for specifying a division timing to divide the record information;
a division device (7) for dividing said record information into front part record information that is said record information before said specified division timing and rear part record information that is said record information after said specified division timing; and
an permission information recording device (7) for generating permission information (51A, 52A) having the same content as said permission information recorded in said recording medium before divided, relevant to each of said front part record information and said rear part record information, and then, recording the information in said recording medium.

23. A computer data signal embodied in a carrier wave and representing a series of instructions which cause a computer to perform steps to execute a recording control process in an information recording apparatus (S), the steps comprising:
a specification step for specifying a division timing in the recording information;
a recording step for recording in said recording medium front part record information that is the record information before said specified division timing and rear part record information that is the record information after said specified division timing;
a generation step for generating permission information indicating whether or not to permit at least one of said front part record information and said rear part record information to be further divided; and
an permission information recording step for recording said generated permission information in said recording medium.

24. A computer data signal embodied in a carrier wave and representing a series of instructions which cause a computer to perform steps to execute a recording control process in an information recording apparatus (S), the steps comprising:
an permission information detection step for detecting the permission information from a recording medium having record information and permission information indicating whether or not to permit execution of edit processing for dividing the record information into two or more items of partial record information recorded therein;
a judgment step for judging the content of the detected permission information; and
an execution step for, only when said judged content corresponds to the content in which said division processing is enabled, executing said edit processing.
